# EUROPÄISCHE PATENTSCHRIFT

(11) **EP 3 587 233 B1**
(45) Veröffentlichungstag und Bekanntmachung des Hinweises auf die Patenterteilung: **17.11.2021**
(21) Anmeldenummer: 19174373.1
(22) Anmeldetag: 14.05.2019
(51) Int. Cl.: B62K 19/40, B62K 19/30, B62M 6/90

(54) **RAHMENELEMENT EINES ZWEIRADS ZUR AUFNAHME EINER ENERGIEVERSORGUNGSEINHEIT**
FRAME ELEMENT OF A BICYCLE FOR HOLDING AN ENERGY SUPPLY UNIT
ÉLÉMENT DE CADRE D'UN DEUX ROUES PERMETTANT DE RECEVOIR UNE UNITÉ D'ALIMENTATION EN ÉNERGIE

(30) Priorität: 27.06.2018 DE 102018210532
(43) Veröffentlichungstag der Anmeldung: 01.01.2020
(73) Patentinhaber: Robert Bosch GmbH, 70442 Stuttgart (DE)
(72) Erfinder: Tenzer, Martin, 72622 Nuertingen (DE)

(56) Entgegenhaltungen:
- EP-A1- 3 239 034
- CN-A- 107 336 768
- CN-A- 107 672 723
- CN-U- 207 292 274
- DE-A1-102015 010 817
- DE-U1-202017 003 772
- DE-U1-202017 105 339

## Beschreibung

Die Erfindung betrifft ein Rahmenelement für ein Zweirad, insbesondere ein Fahrrad, welches dazu eingerichtet ist, eine Energieversorgungseinheit aufzunehmen sowie ein Zweirad mit einem derartigen Rahmenelement.

### Stand der Technik

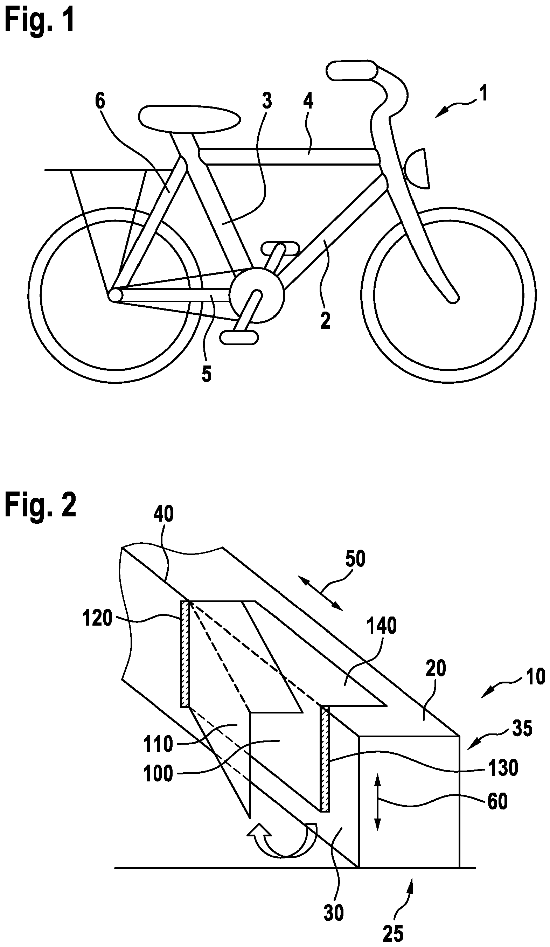

Bei der Nutzung von elektrisch betriebenen Fahrrädern besteht die Notwendigkeit, die zugehörige Energieversorgungseinheit, z.B. einen Akkumulator, am Fahrradrahmen (siehe Figur 1) unterzubringen, möglichst ohne die Beweglichkeit des Fahrers einzuschränken. Üblicherweise wird der Energiespeicher am Fahrradrahmen 1, bestehend aus Unterrohr 2 und Sattelrohr 3 ggf. auch Oberrohr 4 befestigt. Auch eine Befestigung am Hinterbau 5 und 6, an dem das Hinterrad befestigt ist, ist möglich. Dabei besteht gerade beim Sattelrohr 3 die Möglichkeit, den Energiespeicher im Rahmendreieck 2, 3 und 4 oder zwischen Sattelrohr 3 und Hinterrad, z.B. im hinteren Rahmendreieck bzw. hinter dem Sattelrohr anzubringen. In letzterem Fall vergrößert sich u. U. dabei der Abstand zwischen Tretkurbel und Hinterradachse, um genügend Platz für den meist voluminösen Energiespeicher zu schaffen. Eine weitere Möglichkeit der Unterbringung des Energiespeichers besteht darin, diesen am Gepäckträger zu befestigen.

Aus der Schrift EP 2 134 592 B1 ist die Befestigung einer Batterie am Unterrohr bekannt. Hierbei ist das Unterrohr aus Stabilitätsgründen als belastungstragendes, mehrräumiges Rohr mit einer Ausschneidung zum Empfang der Batterie ausgestaltet. Dabei ist vorgesehen, dass sich die seitlich offene Ausschneidung in wenigstens einem Raum im mehrräumigen Rohr erstreckt und wenigstens ein weiterer Raum im Wesentlichen intakt ist.

Aus der Schrift EP 3239034 A1 ist ein gattungsgemässer Fahrradrahmen bekannt, bei dem eine Öffnung vorgesehen ist, in die eine aus mehreren einzelnen Batterieeinheiten, jedoch miteinander verbundene Multiplex-Batterie eingebracht werden kann.

Weiterhin ist aus der EP 1 982 909 B1 eine Kombination aus Batterie und Fahrradrahmen bekannt, bei dem in einem der Rohre des Fahrradrahmens eine bzgl. der Seitenwand tiefgeschnittene Oberkante zur Erzeugung einer zum Teil seitlich offenen Aussparung vorgesehen ist, in die ein Rastrahmen eingesetzt werden kann. Dieser Rastrahmen wird vollständig in die Aussparung eingeführt, so dass er die nachträglich eingeführte Batterie vollständig umschließen kann.

### Offenbarung der Erfindung

Mit der vorliegenden Erfindung soll eine weitere Möglichkeit zur Unterbringung einer Energieversorgungseinheit in einen Zweiradrahmen, insbesondere in einen Fahrradrahmen, beschrieben werden. Hierzu weist der Zweiradrahmen ein Rahmenelement auf, welches wenigstens einen Teil der Energieversorgungseinheit aufnehmen kann. Weiterhin ist vorgesehen, dass dieses Rahmenelement als Teil eines Sattelrohrs, eines Unterrohrs, eines Oberrohrs oder auch des Hinterbaus realisiert werden kann. Ein Merkmal des erfindungsgemäßen Rahmenelements besteht darin, dass wenigstens eine erste Seitenwand und wenigstens eine an die erste Seitenwand angrenzende weitere zweite Seitenwand vorgesehen ist. Die erste Seitenwand und die weitere zweite Seitenwand kann dabei über eine Kante, eine Ecke oder eine kontinuierliche Biegung miteinander verbunden sein. Weiterhin ist vorgesehen, dass das Rahmenelement eine Ausnehmung innerhalb des Rahmenelements aufweist, so dass die Energieversorgungseinheit wenigstens teilweise in den Innenraum des Rahmenelements eingebracht werden kann. Hierzu weist das Rahmenelement auf seiner Außenfläche eine Öffnung auf, durch die ein Zugang zu der Ausnehmung innerhalb des Rahmenelements möglich ist. Der Kern der Erfindung besteht dabei darin, dass sich die Öffnung wenigstens teilweise über die erste Seitenwand und die angrenzende weitere zweite Seitenwand erstreckt. Diese Ausgestaltung erzeugt somit ein gegenüber dem längs gerichteten Rahmenelement einen schräg gerichteter Vorgang für die Aufnahme bzw. die Entnahme der Energieversorgungseinheit.

Durch diese Ausgestaltung der Öffnung in der Oberfläche des Rahmenelements kann erreicht werden, dass der Zugang nicht auf eine Seite begrenzt wird. So ist ein Einbringen einer Energieversorgungseinheit von oben oder von der Seite oft aufgrund des fehlenden Platzes problematisch. Bei einem Unterrohr kann beispielsweise die Entnahme nach oben aufgrund des Rahmendreiecks oder darin befestigter Elemente wie einem Schloss, Trinkflaschen oder Reparaturzeug hinderlich sein. Ebenso kann die seitliche Entnahme bei einer Befestigung des Zweirads an einem Fahrradständer Probleme bereiten. Dagegen hat eine schräg nach oben gerichtete Aufnahme bzw. Entnahme Vorteile, da dieser Raum ausreichend Platz bietet und bei den vorstehenden Nutzungsbedingungen nicht eingeschränkt ist.

Wie bereits ausgeführt, kann die erste Seitenwand sowie die weitere zweite Seitenwand über eine Kante oder eine Ecke miteinander verbunden sein. Dabei wird die Öffnung über die Kante bzw. die Ecke hinweg geführt.

Zur Halterung der Energieversorgungseinheit ist in dem Rahmenelement ein Halteelement vorgesehen. Dabei ist das Haltelement derart ausgestaltet, dass es die Energieversorgungseinheit aufnimmt und arretiert, wenn sie über die Kante bzw. die Ecke in das Innere des Rahmenelements eingebracht wird. Hierzu kann das Halteelement an einem Ende oder auch am Boden der Ausnehmung vorgesehen sein. Weiterhin ist denkbar, dass auch an beiden Ende der Ausnehmung in Längsrichtung des Rahmenelements ein Teil des Halteelements vorgesehen ist, um die Energieversorgungseinheit aufzunehmen und zu arretieren. In einer speziellen Ausgestaltung kann auch vorgesehen sein, dass die Aufnahme in das Haltelement durch ein einfaches lineares Einsetzen erfolgt, während das Arretieren durch eine Drehbewegung nach der Aufnahme erfolgt, ähnlich wie bei einem Bajonett-Verschluss. Auch eine seitliche Verdrehung in der Ausnehmung um die Längsachse des Rahmenelements ist denkbar, um die Energieversorgungseinheit in dem Rahmenelement aus dem Bereich der Öffnung seitlich ins Innere des Rahmenelements zu drehen ist denkbar. Für diesen Fall ist es beispielsweise denkbar, dass zwei oder mehrere Energieversorgungseinheiten nacheinander in das Innere des Rahmenelements eingebracht werden können, ähnlich den Patronen in einem Revolver. Entsprechendes ließe sich auch in Längsrichtung durch die Aneinanderreihung von Energieversorgungseinheiten realisieren, die ausgehend von der Ausnehmung in das Rahmenelement geschoben werden können.

Die Verteilung der Öffnungsfläche der Öffnung auf der ersten Seitenwand und der angrenzenden zweiten Seitenwand kann sowohl gleichverteilt vorgesehen sein, um ein einfaches Einbringen der Energieversorgungseinheit in das Rahmenelement bzw. in dessen Aufnahme über die Kante zu erleichtern, jedoch sind auch andere Verhältnisse der Verteilung der Öffnungsfläche auf den beiden angrenzenden Seitenwänden möglich. So ist denkbar, dass die erste Seitenwand 5 %, 10 %, 20 %, 25 %, 30 %, 33 %, 40 %, 60 %, 70 %, 75 %, 80 % oder 90 % der gesamten Öffnungsfläche der Öffnung aufweist.

Besonders vorteilhaft ist eine erfindungsgemäße Ausgestaltung, bei der wenigstens ein Drittel der Öffnung bzw. der dazugehörigen Öffnungsfläche auf der Außenseite des Rahmenelements auf der ersten Seitenwand und wenigstens ein weiteres Drittel auf der weiteren zweiten Seitenwand angeordnet ist. Durch diese Ausgestaltung erhält die Öffnung eine ausreichende Abmessung, um das Einbringen sowie die Entnahme der Energieversorgungseinheit in der Aufnahme zu ermöglichen. Weiterhin bleibt im Randbereich der jeweiligen Seitenwand noch ausreichend Material übrig, um die mechanische Stabilität sicherzustellen. Dieser ausreichende Randbereich kann zudem zusätzlich noch dazu verwendet werden, Halteelemente anzubringen, z.B. einen Getränkehalter.

Die Ausdehnung der Öffnung in hinsichtlich der Breite der Seitenwand lässt sich ebenfalls unterschiedlich gestalten. So kann die Öffnung ausgehend von der Kante, die die ersten und die zweite Seitenwand verbindet, etwa 5 %, 10 %, 20 %, 25 %, 30 %, 33 %, 40 %, 50 %, 60 %, 70 %, 75 %, 80 % oder 90 % der gesamten Breite der entsprechenden Seitenwand aufweisen.

In einer Weiterbildung der Erfindung weist die Öffnung wenigstens einen Abschnitt auf, bei dem die Breite der Öffnung größer als deren Länge ist, gemessen an der Längsrichtung des Rahmenelements. Diese Weiterbildung ermöglicht es beispielsweise eine kleinere Längsöffnung zu verwenden, falls die Energieversorgungseinheit in Längsrichtung in das Rahmenelement geschoben werden soll. Somit wären die Energieversorgungseinheiten noch besser gegen Beschädigung von außen geschützt. Darüber hinaus kann auch eine nur abschnittsweise vorgesehene größere Breite für Öffnungszwecke vorgesehen sein. So ist denkbar, dass eine Klappe, die die Öffnung verdeckt, mittels einer seitlich in der Breite verlängerten Ausgestaltung haptisch leichter greifbar ist.

Auch das Verschließen einer derartigen Klappe ließe sich seitlich durch eine Vergrößerung der Öffnung sowie der damit verbundenen Klappe einfacher bewerkstelligen. Ein weiteres Argument für eine derartige Weiterbildung besteht darin, dass eine derartige Ausgestaltung der Öffnung Vorteile hinsichtlich Dichtigkeitsanforderungen liefert.

Wie vorstehend bereits ausgeführt, kann eine Abdeckung vorgesehen sein, mit der die Öffnung wenigstens teilweise abgedeckt oder sogar verschlossen werden kann. Diese Abdeckung kann beweglich mittels eines Scharniers oder einer Schiebeklappe am Rahmenelement befestigt sein, z.B. an einem ersten Ende der Öffnung in Längsrichtung des Rahmenelements. Selbstverständlich kann dieses Scharnier oder die Schiebeklappe auch seitlich befestigt sein. Alternativ ist auch möglich, wenigstens an einer Stelle des Randes der Öffnung eine Befestigung vorzusehen, mittels der eine Abdeckung lösbar befestigt werden kann. So ist denkbar, dass zumindest eine Magnethalterung vorgesehen ist, mittels der sich eine Klappe auf der Öffnung befestigen lässt. Die Magnethalterung kann dabei an einer Stelle, an zwei oder an mehreren Stellen vorgesehen sein.

Erfindungsgemäß ist weiterhin vorgesehen, dass das Rahmenelement aus wenigstens zwei Rohrelementen besteht, die miteinander verbunden sind. Dabei können die Rohrelemente durch Verstrebungen, Versteifungen und/oder Querschnittsverjüngungen gegeneinander abgegrenzt oder miteinander verbunden sein. Weiterhin ist vorgesehen, dass sich die Öffnung im Rahmenelement über mehr als einen Rohrabschnitt erstreckt, wobei die Rohrabschnitte sowohl in Längs- als auch in Querrichtung des Rahmenelements verlaufen.

Weitere Vorteile ergeben sich aus der nachfolgenden Beschreibung von Ausführungsbeispielen bzw. aus den abhängigen Patentansprüchen.

### Kurze Beschreibung der Zeichnungen

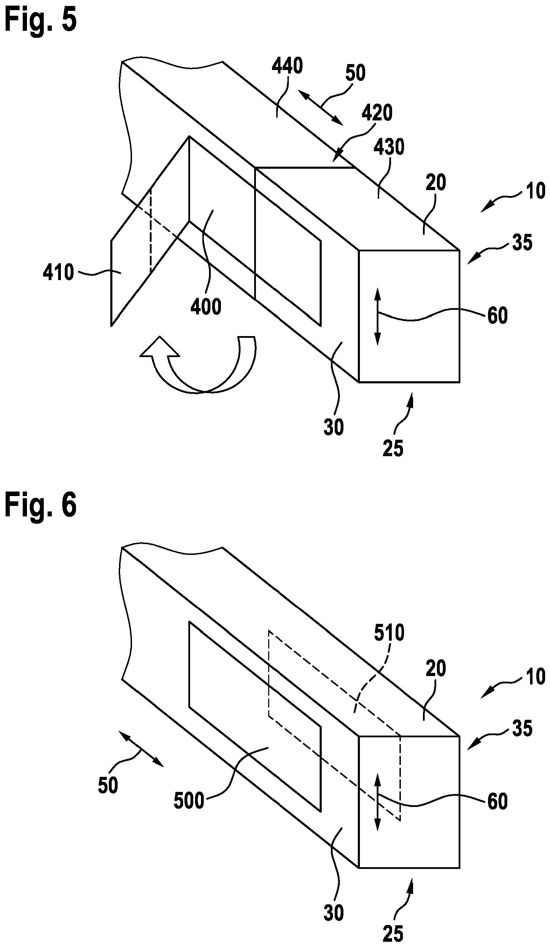

Die Figur 1 zeigt beispielhaft ein Zweirad in Form eines Fahrrads, um mögliche Einsatzorte für das Rahmenelement am Zweiradrahmen zu verdeutlichen. In den Figuren 2 bis 4 werden Ausprägungen der erfindungsgemäß Gestaltung des Rahmenelements dargestellt. Die Figuren 5 bis 7 zeigen weitere mögliche Ausgestaltungen eines Rahmenelements. Keines der in den Figuren gezeigten Ausführungsbeispielen zeigt jedoch alle erfindungsgemässen Merkmale zusammen in einer einzigen Ausführung.

### Ausführungsformen der Erfindung

Zur Versorgung von elektrisch angetriebenen Zweirädern wie Elektrofahrräder, Pedelecs oder eScootern ist es notwendig, das Zweirad mit entsprechender Energie zu versorgen. Hierzu werden üblicherweise Energieversorgungseinheiten in Form von Batterien oder Akkumulatoren verwendet, die während der Fahrt des Zweirads sicher untergebracht werden müssen. Neben der festen Unterbringung der Energieversorgungseinheiten am Zweirad besteht oft der Bedarf, diese Batterien und Akkus für Ladevorgänge oder für andere Zwecke vom Zweirad zu entfernen. Hierbei ergibt sich ein Spannungsfeld zwischen Handhabbarkeit und Sicherheit.

Bei gängigen Elektrofahrrädern werden die Energieversorgungseinheiten direkt auf dem Rahmen befestigt. Neben dem nachteiligen optischen Effekt reduziert sich bei dieser Befestigungsart auch der mögliche Stauraum im Rahmendreieck für andere Anwendungen, wie z.B. die Unterbringung von Trinkflaschen oder Schlössern. Zu diesem Zweck werden zunehmend Elektrofahrräder mit integrierbaren Energieversorgungseinheiten ausgestattet, bei denen ein auswechselbarer Akkumulator in den Rahmen integriert wird. So ist denkbar, den Akkumulator von oben, unten oder von der Seite in den Rahmen ganz oder teilweise zu versenken.

Wie bereits vorstehend ausgeführt, gibt es bei der Nutzung des Zweirads Betriebssituationen, in denen das Einsetzen und/oder die Entnahme des Akkumulators nach oben (z.B. aus dem Unterrohr 2), nach unten (z.B. aus dem Oberrohr 4 oder dem Unterrohr 2) oder seitlich nachteilig ist. So können im Rahmendreieck weitere untergebrachte Komponenten die störungsfreie Entnahme verhindern. Ebenso kann das Einsetzen oder die Entnahme bei einem an einem Fahrradständer angeschlossenen Elektrofahrrad erschweren.

Dieser Umstand wird durch die erfindungsgemäße Gestaltung der Öffnung im Rahmenelement zum Einsetzen und zur Entnahme einer Energieversorgungseinheit verbessert. Anhand der Figur 2 wird die konkrete Ausgestaltung an einem ersten Beispiel schematisch dargestellt. Dabei sei deutlich darauf hingewiesen, dass die gezeigten Ausführungsbeispiele in Form eines Unterrohrs 2, eines Sattelrohrs 3, eines Oberrohrs 4 oder eines Teils des Hinterbaus 5 bzw. 6 realisiert werden können. Es ist sogar denkbar, die Erfindung im Steuerrohr unterzubringen, falls die Energieversorgungseinheit entsprechend dimensioniert ist.

Das Rahmenelement 10 gemäß einer ersten Ausführung der Figur 2 in Längsrichtung 50 quaderförmig ausgestaltet. Dabei weist das Rahmenelement 10 eine linke Seitenwand 30 (z.B. bezogen auf ein Unterrohr 2 welches in Fahrtrichtung eines Fahrrads am Fahrradrahmen 1 angeordnet ist) und eine obere Seitenwand 20 auf, die über eine Kante 40 miteinander verbunden sind. Entsprechend der Quaderform ist ebenfalls eine rechte Seitenwand 35, gegenüber der linken Seitenwand 30 und eine untere Seitenwand 25, gegenüber der oberen Seitenwand 20 vorgesehen, die jedoch in der Figur 2 nicht einsehbar sind. Optional kann auch vorgesehen sein, dass das Rahmenelement 10 nicht quaderförmig gestaltet ist, sondern eine andere Form aufweist. Denkbar wäre beispielsweise, dass nur eine flächige Seite mit einer ansonsten runden gegenüberliegenden Seite vorgesehen ist. Weiterhin optional kann auch vorgesehen sein, dass das Rahmenelement 10 im Querschnitt ein Dreieck, ein Fünfeck, ein Sechseck oder jede beliebe Polygonform darstellt.

Gemäß der vorliegenden Erfindung ist eine Öffnung 100 als Aussparung in der Oberfläche des quaderförmigen Rahmenelements 10 vorgesehen. Dabei ist die Öffnung 100 übergreifend auf wenigstens zwei aneinander angrenzenden Flächen des Rahmenelements 10 angeordnet. Im vorliegenden Beispiel erstreckt sich die Öffnung 100 von der linken Seitenwand 30 bis zur oberen Seitenwand 20 über die Kante 40 hinweg in einen Teilöffnungsbereich 140. Selbstverständlich wäre auch eine Öffnung denkbar, die sich von der oberen Seitenwand 20 über die entsprechende Kante zur rechten Seitenwand 35 erstreckt. Entsprechende Anordnungen lassen sich für jeweils zwei angrenzende Seitenwände bzw. Seitenflächen des Rahmenelements 10 formulieren, ggf. auch, wenn das Rahmenelement nicht quaderförmig ist. Wesentlich ist, dass die Abmessung der Öffnung 100 quer zur Längsrichtung 50 des Rahmenelements 10 derart auf die Energieversorgungseinheit abgestimmt ist, dass ein Einbringen in das Rahmenelement alleine nur von einer Seite, d.h. von links oder von oben nicht möglich ist. Es ist daher durch die Wahl der Abmessungen der Öffnung 100 zwingend nötig, die Energieversorgungseinheit über die verlängerte Kante 40 in die Ausnehmung des Rahmenelements 10 einzubringen bzw. zu entnehmen.

In einer besonderen Ausführung der Erfindung ist vorgesehen, die Öffnungsfläche der Öffnung 110 derart auf den beiden angrenzenden Wänden anzuordnen, dass wenigstens ein Drittel der Öffnungsfläche jeweils auf einer der Wände vorgesehen ist.

Im Rahmenelement 10 kann ein Halteelement vorgesehen sein, welches die Energieversorgungseinheit aufnimmt und gegen unbeabsichtigte Entnahme oder Bewegung arretiert. Hierzu kann an wenigstens einem Ende der Öffnung 100 im Inneren des Rahmenelements 10 eine Halteeinrichtung vorgesehen sein. Alternativ oder zusätzlich kann auch auf dem Boden der Aufnahme im Rahmenelement 10 direkt unterhalb der Öffnung 100 ein Halteelement vorgesehen sein. Generell kann das Halteelement neben einer mechanischen Befestigung und Arretierung auch eine elektrische Kontaktierung und/oder ein Schloss zur Sicherung der Energieversorgungseinheit aufweisen.

Wie in der Figur 2 angedeutet, kann zusätzlich eine Abdeckung 110 vorgesehen sein, mittels der die Öffnung ganz oder teilweise verdeckt werden kann. Die Verdeckung kann dabei im Falle einer leeren Aufnahme, d.h. ohne eine eingebrachte Energieversorgungseinheit oder auch bei eingebrachtem Akkumulator vorgesehen sein. Als Abdeckung kann beispielsweise eine mit einem Scharnier 120 ausgestattete Klappe 110 vorgesehen sein. Optional kann auch vorgesehen sein, dass eine Schiebeklappe vorgesehen ist, die sich ganz oder teilweise längs des Rahmenelements verschieben lässt. Eine weitere Möglichkeit besteht darin, mittels einer magnetischen Befestigung eine Abdeckung aufzubringen. Diese magnetische Befestigung kann dabei einseitig, z.B. im Bereich 120 an einer Seite der Öffnung 100 oder an weiteren Stellen 130 am Rand der Öffnung 100 vorgesehen sein. Diese Form der magnetischen Befestigung hat den Vorteil, dass die Abdeckung ohne mechanische beanspruchte Teile auskommt.

Prinzipiell ist vorgesehen, die Energieversorgungseinheit vollständig in die Ausnehmung des Rahmenelements 10 einzubringen, so dass sie nicht über die Außenseiten 20 und 30 hinausstehen. Durch eine derartige Ausgestaltung wäre ggf. mit einer Abdeckung ein einheitlicher äußerlicher Eindruck möglich. Durch entsprechenden Dichtlippen aus Gummi am Rand der Öffnung 100 wäre die Energieversorgungseinheit zumindest gegen Spritzwasser geschützt.

Demgegenüber kann jedoch auch vorgesehen sein, dass die Energieversorgungseinheit nur teilweise in die Ausnehmung eingebracht wird und sich zumindest teilweise über die Außenfläche des Rahmenelements 10 erhebt.

Das Einlegen und Herausnehmen einer Energieversorgungseinheit kann bei dieser Ausgestaltung deutlich leichter erfolgen, wenn sich die Öffnung auf 2 Seitenwände erstreckt. Die Energieversorgungseinheit kann nicht mehr nur in einer Richtung eingeschwenkt werden, sondern nun neben dem Einschwenken gleichzeitig auch um die eigene Achse gedreht werden. Die Überlagerung dieser beiden Bewegungen ermöglicht ein komfortableres Einlegen und Herausnehmen der Energieversorgungseinheit.

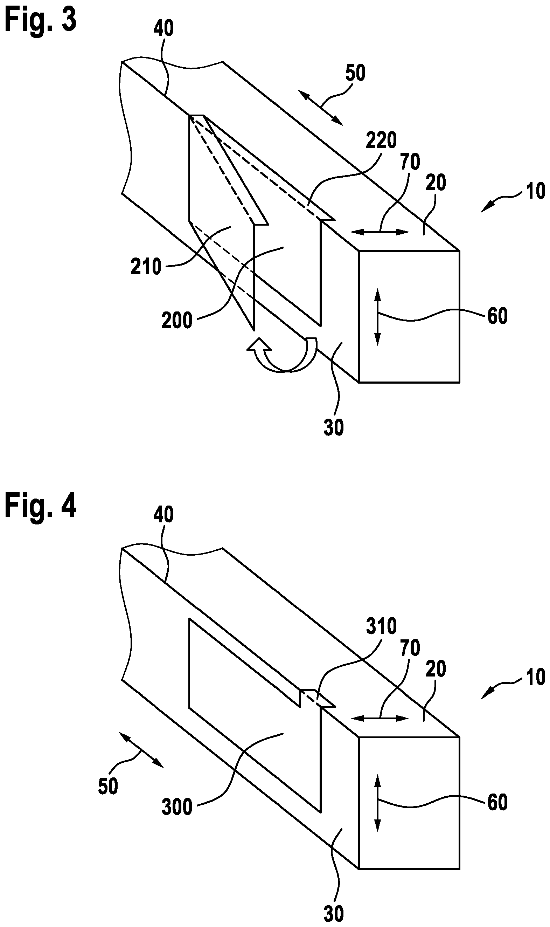

In der Figur 3 ist ein zweites Ausführungsbeispiel der Erfindung vorgesehen. Hierbei wird ebenfalls nur beispielhaft ein quaderförmiges Rahmenelement 10 verwendet, bei dem in der linken Seitenwand 30 der Hauptteil der Öffnung 200 vorgesehen ist. Im Gegensatz zur Ausgestaltung gemäß der Figur 2 ist bei dieser Ausführung nur ein kleiner Teilöffnungsbereich 220 der Öffnungsfläche auf der angrenzenden oberen Seitenwand 20 in Querrichtung 70 vorgesehen. Wesentlich ist jedoch wie auch im ersten Ausführungsbeispiel der Figur 2, dass die Abmessungen der Öffnung 200 auf der linken Seitenwand 30, besonders bezogen auf die Ausdehnung in der Breite 60, derart gewählt ist, dass ein direktes seitliches Einbringen der Energieversorgungseinheit nicht möglich ist, da dessen Breite breiter als die Öffnungsbreite der Öffnung 200 an dieser Seite ist. Auch in diesem zweiten Ausführungsbeispiel kann eine Klappe 210 mit entsprechenden Befestigungen vorgesehen sein, die vergleichbar mit dem ersten Ausführungsbeispiel der Figur 2 ausgestaltet sein kann. Ebenso kann ein Halteelement im Inneren des Rahmenelements 10 zur Halterung und Arretierung bzw. Kontaktierung der Energieversorgungseinheit vorgesehen sein.

Die Figur 4 zeigt ein drittes Ausführungsbeispiel einer Öffnung 300 in dem Rahmenelement 10. Hierbei ist ein größerer Anteil der Öffnungsfläche der Öffnung 300 auf einer Seite 30 angeordnet, während ein kleinerer Teil der Öffnung 310 in Längsrichtung 50 des Rahmenelements 10 über die angrenzende Kante 40 auf die angrenzende Wand (im Fall der Figur 4 die Oberseite 20) hineinreicht. Dieses teilweise Hineinragen der Öffnung 300 in die angrenzende Seite 20 kann dazu genutzt werden, die eingebrachte Energieversorgungseinheit gegen Verrutschen im Rahmenelement 10 zu arretieren, insbesondere, wenn die Energieversorgungseinheit im eingebrachten Zustand bündig an den oberen Rand des Rahmenelements anliegt oder sogar darüber hinaus schaut. Weiterhin kann dieser kleinere Teil 310 der Öffnung 310 in der angrenzenden oberen Seite 20 dazu genutzt werden, die Herausnahme durch einen Eingriff von der oberen Seite 20 zu erleichtern. Hierzu ist günstigenfalls in der Energieversorgungseinheit ein entsprechendes Eingriffselement vorgesehen. Dieses Eingriffselement kann beispielsweise in Form eines beweglichen Buttons ausgestaltet sein, der wiederrum mit einer Arretierungseinheit zur Arretierung der Energieversorgungseinheit im Rahmenelement verbunden ist. Optional kann auch bei dem dritten Ausführungsbeispiel gemäß der Figur 3 eine Klappe, Befestigungen für die Klappe als auch ein Halteelement wie vorstehend ausgeführt vorgesehen sein.

Bezüglich der Ausgestaltungen des ersten, zweiten und dritten Ausführungsbeispiels kann vorgesehen sein, dass sich die Öffnungsfläche der Öffnung 100, 200 oder 300 zu etwa einer Hälfte auf einer ersten Seitenwand bzw. Seitenfläche des Rahmenelements und zur entsprechenden zweiten Hälfte auf einer an die erste Seitenwand angrenzenden zweiten Seitenwand bzw. zweiten Seitenfläche befindet. Hierdurch lässt sich ein Einsetzen der Energieversorgungseinheit ohne ein Anecken über die Kante erreichen. Es ist jedoch auch möglich, dass sich die Öffnungsfläche der Öffnung 100, 200 oder 300 ungleichmäßig auf den beiden angrenzenden Seitenwänden verteilt. So kann vorgesehen sein, dass sich auf der ersten Seitenwand beispielsweise 5 %, 10 %, 20 %, 25 %, 30 %, 33 %, 40 %, 60 %, 70 %, 75 %, 80 % oder 90 % der Öffnungsfläche der Öffnung 100, 200 oder 300 befindet, während auf der zweiten Seitenwand der Rest der Öffnungsfläche angeordnet ist. Durch eine derartige Variation können individuelle Gestaltungen der Rahmenelemente 10 in Form von Unterrohren 2, Sattelrohren 3 oder Oberrohren 4 genutzt werden, beispielsweise bei verschiedenen Ausgestaltungen des Rahmenelements in Form von Quadern, Trapezen, Parallelogrammen oder anders gestalteten Querschnitten. So kann vorgesehen sein, dass wenigstens eine der Seitenwände breiter ausgestaltet ist als wenigstens eine angrenzende Seitenwand. In diesem Fall kann auf der breiteren Seitenwand ein größerer Anteil der Öffnungsfläche vorgesehen sein, so dass die Stabilität des Rahmenelements erhöht wird.

In besonderen Ausgestaltungen der ersten, zweiten und dritten Ausführungsbeispiele ist vorgesehen, dass sich die Ausdehnung der Öffnung 100, 200 oder 300 auf der ersten Seitenwand hinsichtlich deren Breite 60, ausgehend von der Kante bis zu 5 %, 10 %, 20 %, 25 %, 30 %, 33 %, 40 %, 60 %, 70 %, 75 %, 80 % oder 90 % der gesamten Breite 60 der Seitenwand bzw. bis zu bis zu 5 %, 10 %, 20 %, 25 %, 30 %, 33 %, 40 %, 60 %, 70 %, 75 %, 80 % oder 90 % der gesamten Querrichtung 70 der angrenzenden zweiten Seitenwand ausdehnt.

Hinsichtlich des Teilöffnungsbereichs 220 bzw. 310 der zweiten und dritten Ausführungsbeispiele kann vorgesehen sein, dass sich diese Teilöffnungsbereiche 220 bzw. 310 in der zweiten Seitenwand bis zu 5 %, 10 %, 20 %, 25 %, 30 %, 33 %, 40 %, 60 %, 70 %, 75 %, 80 % oder 90 % der Längsausdehnung der Öffnungsfläche der Öffnung 200 bzw. 300 in der angrenzenden ersten Seitenwand erstreckt.

Mit der Figur 5 wird ein viertes Ausführungsbeispiel zur Aufnahme einer Energieversorgungseinheit gezeigt, z.B. einer Batterie, bei dem das Rahmenelement 10 eine Öffnung 400 auf der Seitenwand 30 zum Einsetzen der Energieversorgungseinheit und optional eine Klappe 410 aufweist. Im Gegensatz zu den vorstehend beschriebenen Ausführungsbeispielen besteht das Rahmenelement 10 aus wenigstens zwei Rahmenelementen 430 und 440, wobei sich die Öffnung 400 auf wenigstens einem Teil beider Rahmenelement 430 und 440 erstreckt. Diese zwei Rahmenelement 430 und 440 können separat erzeugt worden sein und nachträglich miteinander verbunden worden sein, z.B. mittels Schweißens. Alternativ kann auch vorgesehen sein, dass das Innere des Rahmenelements 10 durch eine Versteifung im Bereich der Öffnung 400 in zwei Rahmenelement 430 und 440 getrennt wird. Diese Trennung kann sowohl den inneren Aufbau, z.B. die Halterung der Energieversorgungseinheit und/oder dessen Kontaktierung als auch die mechanischen Eigenschaften beider Rahmenelementteile 430 und 440 betreffen. So ist denkbar, dass eines der Rahmenelemente 430 bzw. 440 starrer und das andere flexibler ist, z.B. um bei einem Mountainbikerahmen eine flexiblere Nutzung zu ermöglichen. Die Versteifung kann auch dazu genutzt werden, die Rahmensteifigkeit zu erhöhen, die infolge der Seitenöffnung eventuell erniedrigt worden ist. Weiterhin kann die Versteifung in Teilen variabel gestaltet sein und beispielsweise durch das Einlegen der Energieversorgungseinheit nach unten oder seitlich gedrückt werden. Somit kann die Versteifung gleichzeitig als Dichtung zwischen den beiden Rohrabschnitten dienen. Auf der einen Seite der Versteifung kann der elektrische Anschluss untergebracht sein, der somit durch die Versteifung in einem eigenen abgeschlossenen Rohrabschnitt liegt, wo er vor eindringendem Schmutz, Wasser, etc. besonders geschützt ist.

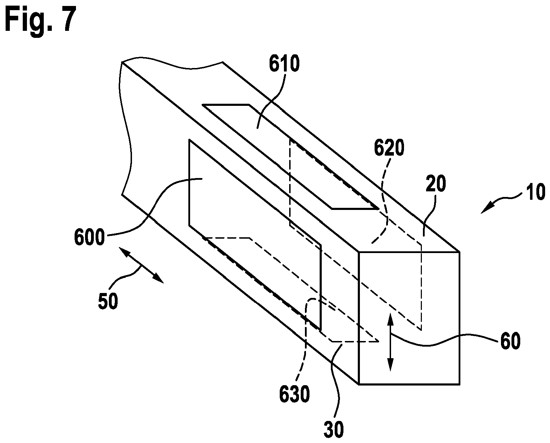

Statt einer Öffnung 500 in einer Seitenwand 30 des Rahmenelements 10 kann auch eine weitere Öffnung 510 in einer anderen Seitenwand 20, 25 oder 35 vorgesehen sein. In Figur 6 ist hierzu die Öffnung 510 in der der linken Seitenwand 30 gegenüberliegenden rechten Seitenwand 35 vorgesehen. Selbstverständlich kann die weitere Öffnung 510 jedoch auch in der oberen Seitenwand 20 oder der unteren Seitenwand 25 vorgesehen sein. Wie in Figur 7 dargestellt, können auch mehrere Öffnungen 600, 610, 620 und 630 in den Seitenwand 20, 25, 30 und 35 des Rahmenelements 10 vorgesehen sein.

Die Verwendung von wenigstens zwei Öffnungen in dem Rahmenelement kann vorteilhaft sein, wenn beispielsweise mehrere Energieversorgungseinheiten eingesetzt werden sollen. So ist denkbar, die einzelnen Energieversorgungseinheiten, z.B. E-Bike Akkumulatoren flacher auszugestalten und sie von rechts oder links in den Rahmen einzusetzen. Flachere Energieversorgungseinheiten haben dabei den Vorteil, dass sie einen effizienteren internen Wärmetransport nach außen ermöglichen, so dass eine Brandgefahr aufgrund eines internen Defekts verringert wird. Weiterhin kann durch eine verteilte Energieversorgung mit mehreren Energieversorgungseinheiten die Nutzung, z.B. Beladung effizienter gestaltet werden. So kann bei einer vorgesehenen kurzen Tourdistanz mit dem Zweirad, z.B. dem Elektrofahrrad, statt eines großen schweren Akkumulators oder mehreren kleiner, im Gesamtgewicht jedoch ebenfalls schwerwiegender Akkumulatoren lediglich ein kleiner, leichter Akkumulator eingesetzt werden. Durch die Verteilung auf mehrere kleinere Akkumulatoren kann auch die Ausfallsicherheit erhöht werden, da bei einem Defekt eines einzelnen Akkumulators wenigstens eine zweite Energieversorgungseinheit zum Betrieb zur Verfügung steht. Darüber hinaus ist der Ersatz eines kleinen Akkumulators günstiger als der Ersatz eines großen Akkumulators.

Ein weiterer Vorteil bei der Verwendung von mehreren Öffnungen im Rahmenelement kann sein, dass die Energieversorgungseinheit zwar durch eine Öffnung eigebracht wird, jedoch mittels einer anderen Öffnung arretiert wird. Weiterhin ist möglich, dass die weitere Öffnung dazu dient, einen Bedien-Zugriff auf die Energieversorgungseinheit herzustellen. Beide Varianten können beispielsweise sinnvoll sein, wenn der Einsatz der Energieversorgungseinheit und die Arretierung/Bedienung von einer anderen Seite erfolgt. So ist denkbar, die Energieversorgungseinheit von einer Seite 30 oder 35 des Rahmenelements 10 einzubringen und die Bedienelement und/oder das Schloss der Energieversorgungseinheit durch eine Öffnung 610 in der Oberseite 20 des Rahmenelements 10 dem Fahrer des Zweirads bzw. des Elektrofahrrads zur Benutzung zur Verfügung zu stellen.

Die Verwendung zweite gegenüberliegender Öffnungen 500 und 510 und entsprechenden gegenüberliegenden Seitenwände 30 und 35 des Rahmenelements 10 kann auch dazu genutzt werden, größere Energieversorgungseinheiten im Rahmenelement unterzubringen. Hierbei kann ausgenutzt werden, dass der größere Querschnitt der Energieversorgungseinheit dazu führt, dass die Energieversorgungseinheit auf beiden Seiten über das Rahmenelement hinaus steht. Dadurch lässt sich auch bei schmalen Rahmenquerschnitten eine standardisierte Energieversorgungseinheit verwenden. Auch ist durch diese Ausgestaltung die Verwendung größere und somit mit mehr Energie versehener Energieversorgungseinheiten möglich. Typischerweise ist jedoch vorgesehen, dass die Energieversorgungseinheiten trotz des Überstands über die Seitenwände 30 und 35 nicht zu sehr hinaus stehen, um die Nutzung, z.B. bei einem Unterrohr 2 eines Fahrradrahmens für den Fahrer nicht zu erschweren. Denkbar ist auch, für die überstehenden Teile Kappen bereitzustellen, die auf die seitlichen, herausstehenden Enden der Energieversorgungseinheit aufgesteckt werden können. Durch diese Kappen kann der optische Eindruck verbessert werden, z.B. indem blickdichte stromlinienförmige Kunststoffkappen aufgebracht werden, die bei dem Rahmenelement eine fließende einheitliche Linie erzeugen.

Es sei nochmal deutlich darauf hingewiesen, dass sich die beschriebenen Öffnungen die vorstehenden Ausführungsbeispiele in jeder Seitenwand 20, 25, 30 und/oder 35 des Rahmenelements 10 befinden können. Hierbei kann die wenigstens eine Öffnung im Wesentlichen auf der linken oder rechten Seite des Rahmenelements 10 in Fahrtrichtung des Zweirads vorgesehen sein, wobei in Bezug auf die Ausführungsbeispiele gemäß der Figur 2 bis 4 die angrenzende Teilöffnungsfläche 140, 220 oder 310 der Öffnung 100, 200 oder 300 nach oben oder nach unten zeigen kann.

In einer alternativen Ausgestaltung der vorstehenden Ausführungsbeispiele kann vorgesehen sein, dass die wenigstens eine beschriebene Öffnung eine gleich große oder größere Ausdehnung in der Breite 60 bzw. Querrichtung 70 als in der Längsrichtung 50 der entsprechende Seitenwand 20, 25, 30 und/oder 35 aufweist. Alternativ oder zusätzlich kann vorgesehen sein, dass die Summe der Ausdehnung der Öffnung in der Breite 60 der Seitenwand und der Querrichtung 70 in der angrenzenden Seitenwand gleich oder geringer als die Ausdehnung der Öffnung in der Längsrichtung 50 ist.

Der Schutzumfang wird jedoch nur durch die nachfolgenden Ansprüche definiert, da die Ausführungsbeispiele nicht alle erfindungsgemässen Merkmale zusammen in einem Beispiel aufzeigen.

## Patentansprüche

1. Rahmenelement (10) für einen Zweiradrahmen (1), welches zur Aufnahme wenigstens eines Teils einer Energieversorgungseinheit vorgesehen ist, insbesondere einer Batterie,
wobei das Rahmenelement (10)
• ein Sattelrohr (3), ein Unterrohr (2), ein Oberrohr (4) oder einen Hinterbau (5, 6) repräsentiert, und
• wenigstens eine erste Seitenwand (30) und angrenzend an die erste Seitenwand (30) wenigstens eine weitere zweite Seitenwand (20, 25) aufweist, und
• eine Ausnehmung zur Aufnahme des wenigstens Teils der Energieversorgungseinheit aufweist, und
• eine Öffnung (100, 200, 300) zur Aufnahme des wenigstens Teils der Energieversorgungseinheit in der Ausnehmung aufweist,
wobei sich die Öffnung (100, 200, 300) wenigstens teilweise über die erste Seitenwand (30) und die angrenzende weitere zweite Seitenwand (20, 25) erstreckt,
**dadurch gekennzeichnet dass**
das Rahmenelement (10) wenigstens zwei sowohl in Längs- als auch in Querrichtung des Rahmenelements verlaufende Rohrabschnitte aufweist, welche durch Verstrebungen, Versteifungen und/oder
Querschnittsverjüngungen gegeneinander abgegrenzt werden, wobei sich eine Öffnung (100, 200, 300) im Rahmenelement (10) über mehr als einen Rohrabschnitt erstreckt.

2. Rahmenelement (10) nach Anspruch 1, **dadurch gekennzeichnet, dass** die erste Seitenwand (30) und die angrenzende zweite Seitenwand (20, 25) über eine Kante (40) verbunden sind und sich die Öffnung (100, 200, 300) über diese Kante (40) erstreckt.

3. Rahmenelement (10) nach Anspruch 2, **dadurch gekennzeichnet, dass** in der Ausnehmung im Inneren des Rahmenelements (10) ein Halteelement zur Halterung der Energieversorgungseinheit vorgesehen ist, wobei das Einsetzen der Energieversorgungseinheit in die Halterung über die Öffnung (100, 200, 300) der Kante (40) erfolgt.

4. Rahmenelement (10) mit einem Halteelement nach Anspruch 3, **dadurch gekennzeichnet, dass** das Haltelement an einem Ende der Öffnung im Inneren des Rahmenelements (10) angeordnet ist.

5. Rahmenelement (10) mit einem Halteelement nach Anspruch 3, **dadurch gekennzeichnet, dass** das Haltelement unterhalb der Öffnung im Inneren des Rahmenelements (10) angeordnet ist.

6. Rahmenelement (10) nach einem der vorherigen Ansprüche, **dadurch gekennzeichnet, dass** die erste Seitenwand (30) 5 %, 10 %, 20 %, 25 %, 30 %, 33 %, 40 %, 60 %, 70 %, 75 %, 80 % oder 90 % der gesamten Öffnungsfläche der Öffnung (100, 200, 300) aufweist.

7. Rahmenelement (10) nach Anspruch 6, **dadurch gekennzeichnet, dass** die Öffnung (100, 200, 300), insbesondere die Öffnungsfläche auf der Außenfläche des Rahmenelements (10), wenigstens
• zu einem Drittel auf der ersten Seitenwand (30) und
• zu einem Drittel auf der weiteren zweiten Seitenwand (20, 25) angeordnet ist.

8. Rahmenelement (10) nach einem der vorherigen Ansprüche, **dadurch gekennzeichnet, dass** die Breite (60) der Öffnung (100, 200, 300) auf der ersten oder zweiten Seitenwand (30, 20) ausgehend von einer die beiden Seitenwände verbindenden Kante (40) 5 %, 10 %, 20 %, 25 %, 30 %, 33 %, 40 %, 50 %, 60 %, 70 %, 75 %, 80 % oder 90 % der gesamten Breite der entsprechenden Seitenwand (30, 20) aufweist.

9. Rahmenelement (10) nach einem der vorhergehenden Ansprüche, **dadurch gekennzeichnet, dass** die Öffnung (100, 200, 300) in Längsrichtung (50) des Rahmenelements (10) wenigstens abschnittsweise eine größere Breite als Länge aufweist.

10. Rahmenelement (10) nach einem der vorhergehenden Ansprüche, **dadurch gekennzeichnet, dass** an wenigstens einem Ende der Öffnung (100, 200, 300) eine bewegliche Abdeckung (110, 210) befestigt ist, mittels der sich die Ausnehmung wenigstens teilweise verschließen lässt.

11. Rahmenelement (10) nach Anspruch 10, **dadurch gekennzeichnet, dass** die bewegliche Abdeckung (110, 210) mittels eines Scharniers, einer Schiebeklappe oder einer Magnethalterung an einem ersten Ende der Öffnung (100, 200, 300) am Rahmenelement (10) angeordnet ist, wobei insbesondere vorgesehen ist, dass sich die Schiebeklappe zum Öffnen der Öffnung (100, 200, 300) ins Innere des Rahmenelements verschieben lässt.

12. Rahmenelement (10) nach Anspruch 10 oder 11, **dadurch gekennzeichnet, dass** das Rahmenelement (10) an einem dem ersten Ende der Öffnung (100, 200, 300) gegenüberliegenden zweiten Ende der Öffnung (100, 200, 300) eine Arretierung für die bewegliche Abdeckung (110, 210) aufweist.

13. Zweiradrahmen, insbesondere ein Fahrradrahmen, mit einem Rahmenelement (10) nach einem der Anspruch 1 bis 12, wobei das Rahmenelement (10) zur Aufnahme wenigstens eines Teils einer Energieversorgungseinheit vorgesehen ist, insbesondere einer Batterie, wobei das Rahmenelement (10)
• ein Sattelrohr (3), ein Unterrohr (2), ein Oberrohr (4) oder einen Hinterbau (5, 6) repräsentiert, und
• wenigstens eine erste Seitenwand (30) und angrenzend an die erste Seitenwand (30) wenigstens eine weitere zweite Seitenwand (20, 25) aufweist, und
• eine Ausnehmung zur Aufnahme des wenigstens Teils der Energieversorgungseinheit aufweist, und
• eine Öffnung (100, 200, 300) zur Aufnahme des wenigstens Teils der Energieversorgungseinheit in der Ausnehmung aufweist,
**dadurch gekennzeichnet, dass**
sich die Öffnung (100, 200, 300) wenigstens teilweise über die erste Seitenwand (30) und die angrenzende zweite Seitenwand (20, 25) erstreckt.

## Claims

1. Frame element (10) for a two-wheeler frame (1), which frame element is provided for receiving at least part of an energy supply unit, in particular a battery,
wherein the frame element (10)
• represents a seat tube (3), a down tube (2), a top tube (4) or chainstays (5, 6), and
• has at least one first side wall (30) and at least one further second side wall (20, 25) adjacent to the first side wall (30), and
• has a recess for receiving at least part of the energy supply unit, and
• has an opening (100, 200, 300) for receiving at least part of the energy supply unit in the recess,
wherein the opening (100, 200, 300) at least partially extends over the first side wall (30) and the adjacent further second side wall (20, 25), **characterized in that**
the frame element (10) has at least two tube portions which run both in the longitudinal direction and in the transverse direction of the frame element and are delimited from one another by braces, stiffened portions and/or cross-sectional tapered portions, wherein an opening (100, 200, 300) in the frame element (10) extends over more than one tube portion.

2. Frame element (10) according to Claim 1, **characterized in that** the first side wall (30) and the adjacent second side wall (20, 25) are connected via an edge (40), and the opening (100, 200, 300) extends over said edge (40).

3. Frame element (10) according to Claim 2, **characterized in that** a holding element for holding the energy supply unit is provided in the recess in the interior of the frame element (10), wherein the energy supply unit is inserted into the holder via the opening (100, 200, 300) of the edge (40).

4. Frame element (10) with a holding element according to Claim 3, **characterized in that** the holding element is arranged at an end of the opening in the interior of the frame element (10).

5. Frame element (10) with a holding element according to Claim 3, **characterized in that** the holding element is arranged below the opening in the interior of the frame element (10).

6. Frame element (10) according to one of the preceding claims, **characterized in that** the first side wall (30) comprises 5%, 10%, 20%, 25%, 30%, 33%, 40%, 60%, 70%, 75%, 80% or 90% of the entire opening surface of the opening (100, 200, 300).

7. Frame element (10) according to Claim 6, **characterized in that** the opening (100, 200, 300), in particular the opening surface on the outer surface of the frame element (10), is arranged at least
• up to a third on the first side wall (30) and
• up to a third on the further second side wall (20, 25).

8. Frame element (10) according to one of the preceding claims, **characterized in that** the width (60) of the opening (100, 200, 300) on the first or second side wall (30, 20) starting from an edge (40) connecting the two side walls comprises 5%, 10%, 20%, 25%, 30%, 33%, 40%, 50%, 60%, 70%, 75%, 80% or 90% of the entire width of the corresponding side wall (30, 20) .

9. Frame element (10) according to one of the preceding claims, **characterized in that** the opening (100, 200, 300) in the longitudinal direction (50) of the frame element (10) has a greater width than length at least in sections.

10. Frame element (10) according to one of the preceding claims, **characterized in that** a movable covering (110, 210), by means of which the recess can be at least partially closed, is fastened to at least one end of the opening (100, 200, 300).

11. Frame element (10) according to Claim 10, **characterized in that** the movable covering (110, 210) is arranged on the frame element (10) by means of a hinge, a sliding flap or a magnetic holder at a first end of the opening (100, 200, 300), wherein it is provided in particular that the sliding flap can be moved into the interior of the frame element for opening the opening (100, 200, 300).

12. Frame element (10) according to Claim 10 or 11, **characterized in that** the frame element (10) has a lock for the movable covering (110, 210) at a second end of the opening (100, 200, 300) opposite the first end of the opening (100, 200, 300).

13. Two-wheeler frame, in particular a bicycle frame, with a frame element (10) according to one of Claims 1 to 12, wherein the frame element (10) is provided for receiving at least part of an energy supply unit, in particular a battery,
wherein the frame element (10)
• represents a seat tube (3), a down tube (2), a top tube (4) or chainstays (5, 6), and
• has at least one first side wall (30) and at least one further second side wall (20, 25) adjacent to the first side wall (30), and
• has a recess for receiving at least part of the energy supply unit, and
• has an opening (100, 200, 300) for receiving at least part of the energy supply unit in the recess,
**characterized in that**
the opening (100, 200, 300) extends at least partially over the first side wall (30) and the adjacent second side wall (20, 25).

## Revendications

1. Élément de cadre (10) pour un cadre de deux-roues (1), lequel élément est prévu pour la réception d'au moins une partie d'une unité d'alimentation en énergie, en particulier d'une batterie,
l'élément de cadre (10)
• représentant un tube de selle (3), un tube inférieur (2), un tube supérieur (4) ou une structure arrière (5, 6), et
• présentant au moins une première paroi latérale (30) et, de manière adjacente à la première paroi latérale (30), au moins une autre deuxième paroi latérale (20, 25), et
• un évidement servant à la réception de l'au moins une partie de l'unité d'alimentation en énergie, et
• une ouverture (100, 200, 300) servant à la réception de l'au moins une partie de l'unité d'alimentation en énergie dans l'évidement,
l'ouverture (100, 200, 300) s'étendant au moins partiellement sur la première paroi latérale (30) et l'autre deuxième paroi latérale (20, 25) adjacente, **caractérisé en ce que**
l'élément de cadre (10) présente au moins deux parties de tube s'étendant à la fois dans la direction longitudinale et dans la direction transversale de l'élément de cadre, lesquelles sont délimitées les unes par rapport aux autres par des entretoises, des raidissements et/ou des rétrécissements de section transversale, une ouverture (100, 200, 300) dans l'élément de cadre (10) s'étendant sur plus d'une partie de tube.

2. Élément de cadre (10) selon la revendication 1, **caractérisé en ce que** la première paroi latérale (30) et la deuxième paroi latérale (20, 25) adjacente sont reliées par une arête (40) et l'ouverture (100, 200, 300) s'étend sur cette arête (40).

3. Élément de cadre (10) selon la revendication 2, **caractérisé en ce qu'**un élément de retenue servant au support de l'unité d'alimentation en énergie est prévu dans l'évidement à l'intérieur de l'élément de cadre (10), l'insertion de l'unité d'alimentation en énergie dans le support s'effectuant via l'ouverture (100, 200, 300) de l'arête (40).

4. Élément de cadre (10) comportant un élément de retenue selon la revendication 3, **caractérisé en ce que** l'élément de retenue est disposé à une extrémité de l'ouverture à l'intérieur de l'élément de cadre (10).

5. Élément de cadre (10) comportant un élément de retenue selon la revendication 3, **caractérisé en ce que** l'élément de retenue est disposé en dessous de l'ouverture à l'intérieur de l'élément de cadre (10).

6. Élément de cadre (10) selon l'une des revendications précédentes, **caractérisé en ce que** la première paroi latérale (30) présente 5 %, 10 %, 20 %, 25 %, 30 %, 33 %, 40 %, 60 %, 70 %, 75 %, 80 % ou 90 % de la surface totale de l'ouverture (100, 200, 300).

7. Élément de cadre (10) selon la revendication 6, **caractérisé en ce que** l'ouverture (100, 200, 300), en particulier la surface d'ouverture sur la surface extérieure de l'élément de cadre (10), est disposée
• pour un tiers sur la première paroi latérale (30) et
• pour un tiers sur l'autre deuxième paroi latérale (20, 25) .

8. Élément de cadre (10) selon l'une des revendications précédentes, **caractérisé en ce que** la largeur (60) de l'ouverture (100, 200, 300) sur la première ou deuxième paroi latérale (30, 20) à partir d'une arête (40) reliant les deux parois latérales présente 5 %, 10 %, 20 %, 25 %, 30 %, 33 %, 40 %, 50 %, 60 %, 70 %, 75 %, 80 % ou 90 % de la largeur totale de la paroi latérale (30, 20) correspondante.

9. Élément de cadre (10) selon l'une des revendications précédentes, **caractérisé en ce que** l'ouverture (100, 200, 300) présente, au moins dans certaines parties, une largeur plus grande qu'une longueur dans la direction longitudinale (50) de l'élément de cadre (10).

10. Élément de cadre (10) selon l'une des revendications précédentes, **caractérisé en ce qu'**un couvercle mobile (110, 210) est fixé à au moins une extrémité de l'ouverture (100, 200, 300), couvercle au moyen duquel l'évidement peut être fermé au moins partiellement.

11. Élément de cadre (10) selon la revendication 10, **caractérisé en ce que** le couvercle mobile (110, 210) est disposé au moyen d'une charnière, d'un volet coulissant ou d'un support magnétique à une première extrémité de l'ouverture (100, 200, 300) sur l'élément de cadre (10), le volet coulissant pouvant en particulier coulisser à l'intérieur de l'élément de cadre pour l'ouverture de l'ouverture (100, 200, 300).

12. Élément de cadre (10) selon la revendication 10 ou 11, **caractérisé en ce que** l'élément de cadre (10) présente un verrouillage pour le couvercle mobile (110, 210) à une deuxième extrémité de l'ouverture (100, 200, 300) opposée à la première extrémité de l'ouverture (100, 200, 300).

13. Cadre de deux-roues, en particulier cadre de bicyclette, comportant un élément de cadre (10) selon l'une des revendications 1 à 12, l'élément de cadre (10) étant prévu pour la réception d'au moins une partie d'une unité d'alimentation en énergie, en particulier d'une batterie, l'élément de cadre (10)
• représentant un tube de selle (3), un tube inférieur (2), un tube supérieur (4) ou une structure arrière (5, 6), et
• présentant au moins une première paroi latérale (30) et, de manière adjacente à la première paroi latérale (30), au moins une autre deuxième paroi latérale (20, 25), et
• un évidement servant à la réception de l'au moins une partie de l'unité d'alimentation en énergie, et
• une ouverture (100, 200, 300) servant à la réception de l'au moins une partie de l'unité d'alimentation en énergie dans l'évidement,
**caractérisé en ce que**
l'ouverture (100, 200, 300) s'étend au moins partiellement sur la première paroi latérale (30) et la deuxième paroi latérale (20, 25) adjacente.
